# EUROPEAN PATENT APPLICATION

(11) **EP 1 306 176 A1**
(43) Date of publication of application: **02.05.2003**
(21) Application number: 01949906.0
(22) Date of filing: 04.07.2001
(51) Int. Cl.: B28B 3/20, C04B 35/00, B01J 35/04, F01N 3/28, B22F 3/02

(54) **ARTICLE FORMED INTO HONEYCOMB**

(30) Priority: 28.07.2000 JP 2000228449
(71) Applicant: NGK INSULATORS, LTD., Nagoya-shi Aichi 467-8530 (JP)
(72) Inventor: KATO, Shigeki, NGK INSULATORS, LTD., Nagoya-shi, Aichi 467-8530 (JP); HIRAI, Sadaaki, NGK INSULATORS, LTD., Nagoya-shi, Aichi 467-8530 (JP); KAWAE, Takayuki, NGK INSULATORS, LTD., Nagoya-shi, Aichi 467-8530 (JP)
(74) Representative: Paget, Hugh Charles Edward
(86) International application number: JP0105781
(87) International publication number: WO02009916

(57) **Abstract**

A honeycomb formed body is obtained by subjecting a mixture of a raw material powder and a forming binder to extrusion, wherein the forming binder is a mixture of a wax and a thermoplastic resin and the mixing ratio of the thermoplastic resin in the forming binder is 5 to 50% by weight. A honeycomb formed body having a partition wall as thin as 25 to 100 µm can be mass-produced efficiently without generating cracks or deforming the die of extruder.

## Description

### Technical Field

The present invention relates to a honeycomb formed body used, for example, as a carrier for catalyst for purification of automobile exhaust gas, as well as to a process for production of such a honeycomb formed body.

### Background Art

In recent years, the regulation for exhaust gas has become increasingly stricter from the consideration of environmental problems. In order to respond thereto, the catalysts used for purification of exhaust gas are required to have a higher purification ability. Meanwhile, in development of engines, lower fuel consumption and higher output are aimed at strongly and, in keeping pace with such a movement, the catalysts used for exhaust gas purification are also required to show a smaller pressure loss.

In order to satisfy such requirements, it is being increasingly conducted to allow the partition wall of a honeycomb structure to have a smaller thickness in order to make easier the flow of gas through the honeycomb structure and reduce its pressure loss and further in order to make lighter the catalyst for exhaust gas purification produced from the honeycomb structure and thereby reduce the heat capacity of the catalyst and increase the purification ability of the catalyst during engine warm-up. Specifically explaining, a honeycomb structure having a partition wall thickness of 6 mil (150 µm) was a main stream, but a honeycomb structure having a partition wall thickness of 2 mil (50 µm) is currently becoming a main stream. Incidentally, "honeycomb structure" refers to a structure having a large number of cells separated from each other by partition walls.

Meanwhile, a honeycomb structure is ordinarily produced by mixing a raw material powder (e.g. a ceramic powder or a metal powder) with a binder, etc., subjecting the mixture to extrusion through a die having a lattice-shaped slits, and drying and firing the extrudate. As the binder used in production of a honeycomb structure by extrusion, a water-soluble thermosetting methyl cellulose type binder has been used.

As the partition walls of honeycomb structure become thinner, each width of the lattice-shaped slits formed in the die becomes smaller; therefore, in production of such a honeycomb structure, a binder becomes necessary which has such high fluidity as to enable the quick flowing of forming material into such a die. Further, as the partition walls of honeycomb structure become thinner, the formed body just leaving the die has a smaller strength and tends to deform owing to the own weight; therefore, a binder becomes necessary which has such high shape retainability as to enable the solidification of formed body soon after leaving the die.

Hence, it has been conducted to form a honeycomb structure by using a billet high in hardness and shape retainability or by using a billet low in hardness and high in fluidity.

However, the billet high in hardness had problems, because its low fluidity makes impossible the easy flowing into die and makes low the production efficiency and moreover the high forming pressure required invites the deformation or wear of die as the times of forming increase.

Further, in using the billet low in hardness, the formed body from the die need be endowed with a strength, which makes it necessary to heat-solidify the binder present in the formed body by dielectric drying. The transfer of the formed body to a dielectric drier is conducted while applying an air current from below the formed body to prevent its deformation owing to the own weight; therefore, there was a problem that the portion of the formed body receiving the air current is dried and generates cracks.

In this connection, the present inventors previously disclosed, in Japanese Patent Application No. 2000-130446, a process for producing a honeycomb structure, wherein a thermoplastic material (which is a mixture of a wax and a thermoplastic resin) is used as a forming binder and the mixing ratio of the wax and the thermoplastic resin is specified and thereby a honeycomb formed body is produced while maintaining appropriate shape retainability and preventing a rise in forming pressure. This honeycomb formed body, as compared with conventional honeycomb formed bodys, employs a far lower forming pressure, has almost satisfactory shape retainability, and is superior in formability; however, it still has a room for improvement in shape retainability and therefore it has been desired to improve its form stability by making a study on the above-mentioned mixing ratio.

The present invention has been made in view of the above-mentioned problems and needed improvements of the prior art, and aims at providing a honeycomb formed body of thin partition wall thickness and a process for producing such a honeycomb formed body, ensuring mass production without impairing the product quality.

### Disclosure of the Invention

According to the present invention, there is provided a honeycomb formed body comprising: a mixture of a raw material powder and a forming binder , the mixture being subjected to extrusion, and the forming binder being a mixture of a wax and a thermoplastic resin, wherein the mixing ratio of the thermoplastic resin in the forming binder is 5 to 50% by weight.

The mixing ratio of the thermoplastic resin in the forming binder is more preferably 20 to 40% by weight, and the material powder used may be a ceramic powder (e.g. a mixed powder having a cordierite composition) or a metal powder. The honeycomb formed body has a partition wall thickness of preferably 25 to 100 µm.

The honeycomb formed body may be used as a carrier for catalyst for removal of harmful substances and particles from automobile exhaust gas.

According to the present invention there is also provided a process for producing the above-mentioned honeycomb formed body by subjecting a mixture of a raw material powder and a forming binder to extrusion, which process comprises heating the mixture to a forming temperature to melt the forming binder, subjecting the heated mixture to extrusion, and cooling and solidifying the formed body.

### Brief Description of the Drawing

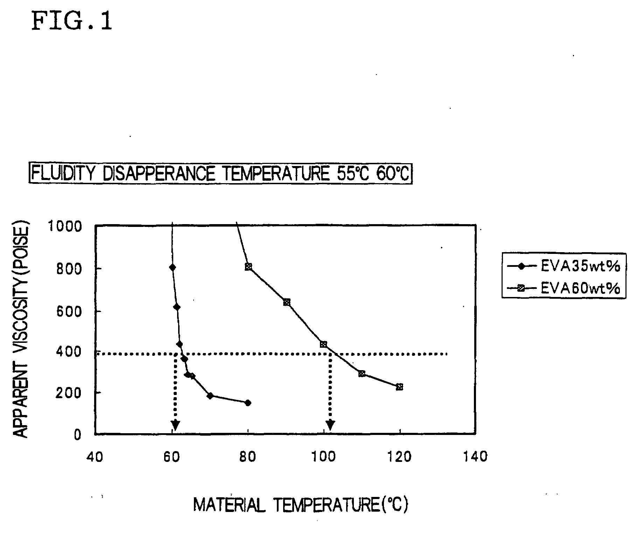

Fig. 1 is a graph showing the relationship between material temperature and apparent viscosity when the content of thermoplastic resin is 35% or 60%.

### Best Mode for Carrying Out the Invention

In the present invention, the honeycomb formed body is produced by subjecting a mixture of a raw material powder and a forming binder to extrusion. A thermoplastic material is used as the forming binder.

The thermoplastic material melts when heated and can change its viscosity freely depending upon the heating temperature. Therefore, desired fluidity can be obtained by selecting the temperature appropriately and mass production of honeycomb formed body is possible without sacrificing the production efficiency.

The molten thermoplastic material solidifies when cooled. Therefore, the formed body leaving the die of extruder is immediately quenched with cold water, cold air not hotter than the solidification point of the formed body, or the like; thereby, the binder in the formed body can be solidified easily before the formed body deforms owing to the own weight, and the formed body can retain its shape.

A water-insoluble forming material is used in the present invention, making it unnecessary to dry the formed body. In extrusion using a water-soluble binder, a mixture of a raw material powder and a forming binder (hereinafter, this mixture is called "raw material mixture") must be subjected to vacuum defoaming to remove the foams present in the mixture; however, the local drying appearing during the vacuum defoaming gives rise to a hard material and this hard material causes die plugging. In contrast, when a water-insoluble forming binder is used, the above drying does not take place, no die plugging is caused, and an increased production efficiency can be obtained also from such an aspect. Incidentally, when a water-insoluble forming binder is used, the vacuum defoaming is not essential.

In the present invention, the water-insoluble forming binder is specifically a wax and a thermoplastic resin. As the wax, there are preferably used a paraffin wax, a microcrystalline wax, etc.; as the thermoplastic resin, there are preferably used ordinary thermoplastic resins such as EVA, polyethylene, polystyrene, liquid crystal polymer, engineering plastic and the like. In the present invention, the forming material can be used in one kind or in combination of two or more kinds. The forming material may be mixed with auxiliary agents such as coupling agent, lubricant, dispersing agent and the like.

In the present invention, when a mixture of a wax and a thermoplastic resin is used as the forming binder, the mixing ratio of the thermoplastic resin in the forming binder is preferably 5 to 50% by weight, more preferably 20 to 40% by weight.

In the honeycomb formed body using a thermoplastic material, an important item by which the shape retainability of the honeycomb material can be predicted, is the degree of a temperature difference between a temperature at which the mixed material of a raw material powder and a forming binder is melted, kneaded and extruded (this temperature is hereinafter referred to as "forming temperature") and a temperature at which the extrudate begins to solidify. This temperature difference is referred to as "temperature sensitivity", and a smaller temperature difference (that is, a higher temperature sensitivity) indicates higher shape retainability of extrudate.

The temperature sensitivity is influenced by the mass ratio of forming binder to raw material powder, the mass ratio of wax and thermoplastic resin in forming binder, the melting point difference between wax and thermoplastic resin, etc. A higher temperature sensitivity results in higher shape retainability of extrudate, higher rate of extrusion and, resultantly, significantly improved efficiency of extrudate production.

Here, the effect of temperature sensitivity is explained specifically on a case of producing an extrudate using an EVA as the thermoplastic resin and EVA 35% and EVA 60% as the mixing ratio of the thermoplastic resin in the forming binder.

Fig. 1 shows an apparent viscosity measured using a falling type flow tester (a product of Shimadzu Corporation) with the material temperature being taken as a parameter and other conditions being set at constant levels.

Temperature sensitivities are compared at a given extrusion temperature. For example, the forming temperature when the apparent viscosity is 400 poise, is, as shown in Fig. 1, about 60°C in the extrudate of EVA 35% and as high as about 100°C in the extrudate of EVA 60%. Meanwhile, the temperatures at which these extrudates express respective shape retainabilities (hereinafter, these temperatures are each referred to as "fluidity disappearance temperature"), is about 55°C in the extrudate of 35% and about 60°C in the extrudate of 60%. Therefore, as shown in Table 1, the extrudate wherein the mixing ratio of thermoplastic resin in forming binder is 35%, has higher temperature sensitivity and, resultantly, has higher shape retainability.

**Table 1**

| Thermoplastic resin | Forming temperature | Fluidity disappearance temperature | Temperature difference (temperature sensitivity) |
|---|---|---|---|
| 35% by weight | 60° C | 55° C | 5° C |
| 60% by weight | 100° C | 60° C | 40° C |

While in-depth explanation is made later in Examples, a mixing ratio (of thermoplastic resin) higher than 50% results in increased forming temperature, reduced shape retainability, and possible deformation of extrudate. A mixing ratio (of thermoplastic resin) higher than 40% results in improved shape retainability and easy shape formation, but in lower extrusion rate and reduced productivity.

Meanwhile, a mixing ratio (of thermoplastic resin) lower than 5% results in reduced binding force of forming binder and difficult formation of extrudate shape. A mixing ratio (of thermoplastic resin) lower than 20% makes shape formation easy but results in very high temperature sensitivity; therefore, the temperature control during production is severe, resulting in reduced productivity.

In the present invention, a mixture of a raw material powder and a forming binder is subjected to extrusion. The amount of the forming binder in this mixture differs depending upon the kind of the forming binder used, and it is such an amount that desired fluidity can be obtained.

In the present invention, the raw material powder used in production of a honeycomb formed body is suitably a ceramic power or a metal powder. As the ceramic powder, there can be used oxide powders such as mixed powder of cordierite composition, alumina, mullite and the like; and nitride powders such as silicon nitride, silicon carbide, aluminum nitride and the like. As the metal powder, there can be used powders of Fe, Cr, Ni, Al, etc.

In the present invention, the honeycomb formed body is produced by extrusion. As to the kneading apparatus, there is no particular restriction as long as it is an apparatus enabling heating and pressure application. An ordinary kneader, a pressure kneader, a twin screw continuous kneader and extruder, etc. can be used.

As to the forming apparatus used in the present invention, there is no particular restriction as long as it is an apparatus enabling heating, pressure application and extrusion. There can be used an extruder of plunger type, a pug mill, an injection forming machine, a singe screw continuous extruder, a twin screw continuous kneader, etc.

In the present invention, it is possible to conduct kneading and forming simultaneously by using, for example, a twin screw continuous kneader and extruder capable of conducting kneading and forming simultaneously.

In continuous forming, it is necessary to use a binder of fine particles. As a means for obtaining such a binder, a spray drier or freeze-grinding can be used, for example. There is no particular restriction as to the means for heating the forming apparatus, and the means may be a heater or circulation of a heat medium (e.g. an oil).

In the present invention, the extrudate leaving the die of extruder is cooled and solidified to prevent the deformation of the extrudate by own weight, particularly, the collapse of cells. There is no particular restriction as to the method for cooling, and a method such as air cooling, water cooling by spraying, or the like can be used. The extrudate may be dropped into water for rapid cooling. Forced cooling is not necessary and cooling at room temperature is sufficient, depending upon the forming temperature, extrusion rate and EVA amount used. While extrusion is ordinarily conducted laterally from an extruder, extrusion may be conducted downward from a vertical extruder.

The cooling temperature of an extrudate right after extrusion from an extruder die can be a temperature at which the forming binder in the extrudate is solidified. The difference between the forming temperature and the cooling temperature is preferably small because, at such a level, the stress during cooling is small, and the cooling rate is preferably small. It is because since the thermoplastic material is cooled and solidified by the temperature decrease caused by cooling, strong solidification of extrudate surface alone may allow the internal cells of higher temperatures to generate cracks.

In the present invention, there is no particular restriction as to the sectional shape of the cells of the honeycomb formed body. The sectional shape may be a polygon such as triangle, tetragon, hexagon and the like; a circle; etc. The density of the cells may be 300 to 2,000 cells/in.².

In firing the extrudate at a low temperature range, conditions causing no cell collapse are selected in view of the vaporization curve of the forming binder; at a high temperature range, there are selected conditions under which intended levels of porosity, thermal expansion coefficient, etc. are obtained.

In degreasing and firing of the honeycomb formed body, air, an inert atmosphere, vacuum or the like can be selected depending upon the kind of the raw material powder used.

For example, when a mixed powder of cordierite (oxide) composition is used, degreasing is conducted in air, then firing is conducted in air, and degreasing and firing is ordinarily conducted in a single kiln or a continuous kiln such as tunnel or the like.

When the honeycomb structure produced as above is used as a catalyst for automobile exhaust gas, a γ-alumina layer is formed on the cell inner surfaces of the honeycomb structure; into the pores of the γ-alumina layer is loaded, as a catalyst component, a noble metal such as platinum, rhodium, vanadium or the like; then, the catalyst is baked at a temperature of about 600°C.

The present invention is described in more detail below by way of Examples. However, the present invention is not restricted to these Examples.

### (Examples 1 to 12)

Using, as a raw material powder, a mixed powder having a cordierite composition and, as a forming binder, a mixture of a wax and a thermoplastic resin, there was produced a honeycomb formed body having a circular end surface shape, a rectangular cell sectional shape, a partition wall thickness of 2 mil (50 µm) and a cell density of 600 cells/in.². The mixing ratio of the forming binder is shown in Table 2.

First, to a mixed powder having a cordierite composition was added a forming binder having an average particle diameter of 100 µm so that the content of the forming binder in 100 weight % of a raw material mixture obtained became 28 mass %. The resulting raw material mixture was kneaded by a pressure kneader. The kneaded material was made into a cylindrical forming material (a billet) using a pug mill. Then, the billet was preheated to a forming temperature shown in Table 2, in a water bath, and subjected to forming by a plunger forming machine. The forming temperature is shown in Table 2. The wax in the forming binder was a paraffin wax (a product of Nippon Seiro Co., Ltd.), a microcrystalline wax (a product of Nippon Seiro Co., Ltd.) or oleic acid (a product of Katayama Chemical, Inc.); and the resin was EVA 420 (a product of Mitsui DuPont Chemical K.K.).

Then, the honeycomb extruded from the die of the plunger forming machine (the extrusion rate is shown in Table 2) was cooled by a method shown in Table 2. The resulting honeycomb formed body was visually examined for cell shape. The results are shown in Table 2.

### (Comparative Example 2)

Using only a wax as a forming binder, a honeycomb formed body similar to those of Examples 1 to 12 was produced under the conditions shown in Table 2 according to the same method as in Examples 1 to 12.

### (Comparative Example 2)

Using EVA 60% as a forming binder, a honeycomb formed body similar to those of Examples 1 to 12 was produced under the conditions shown in Table 2 according to the same method as in Examples 1 to 12.

**Table 2**

| | Amount of EVA added (mass %) | Forming temperature (°C) | Cooling Method | Extrusion rate (mm/sec) | Shape formability | Cell collapse |
|---|---|---|---|---|---|---|
| Comp. Ex. 1 | 0 (wax 100) | 55 | Natural cooling at room temperature | Impossible to measure due to no honeycomb formation | No shape formation | Impossible to evaluate |
| Ex. 1 | 5 (wax 95) | 56 | Natural cooling at room temperature | 15 | Slight deformation | Good |
| Ex. 2 | 10 (wax 90) | 57 | Natural cooling at room temperature | 20 | Good | Good |
| Ex. 3 | 20 (wax 80) | 58 | Natural cooling at room temperature | 20 | Good | Good |
| Ex. 4 | 20 (wax 80) | 58 | Natural cooling at room temperature | 30 | Good | Good |
| Ex. 5 | 20 (wax 80) | 58 | Cooling by 50°C air | 40 | Good | Good |
| Ex. 6 | 35 (wax 65) | 59 | Natural cooling at room temperature | 20 | Good | Good |
| Ex. 7 | 35 (wax 65) | 60 | Natural cooling at room temperature | 20 | Good | Good |
| Ex. 8 | 35 (wax 65) | 60 | Cooling by 50°C air | 30 | Good | Good |
| Ex. 9 | 35 (wax 65) | 60 | Cooling by 40°C air | 40 | Good | Slight |
| Ex. 10 | 40 (wax 60) | 62 | Cooling by 40°C air | 20 | Good | Good |
| Ex. 11 | 50 (wax 50) | 70 | Cooling by 40°C air | 10 | Good | Good |
| Ex. 12 | 50 (wax 50) | 80 | Cooling by 30°C air | 10 | Slight deformation | Medium collapse |
| Comp. Ex. 2 | 60 (wax 40) | 120 | Cooling by 40°C air | 20 | Big deformation | Severe collapse |

As is clear from Table 2, when the amount of EVA (a thermoplastic resin) used is in an appropriate range of 5 to 50 mass %, shape formability is good and there is substantially no cell collapse. When the EVA amount is in a range of, in particular, 20 to 40 mass %, shape formability and cell collapse are very good, extrusion at a higher rate is possible as compared with when other EVA amount range is used, and productivity is superior.

As is also clear from Table 2, hot air cooling becomes necessary as the extrusion rate of honeycomb formed body becomes higher.

### Industrial Applicability

According to the present invention, a honeycomb formed body having a partition wall thickness as small as 25 to 100 µm can be mass-produced efficiently without generating cracks or deforming the die of extruder. Also, according to the present invention, the shape retainability and form stability of the honeycomb formed body obtained can be improved by specifying the mixing ratio of the wax and the thermoplastic resin constituting the forming binder.

## Claims

1. A honeycomb formed body comprising:
a mixture of a raw material powder and a forming binder , the mixture being subjected to extrusion, and the forming binder being a mixture of a wax and a thermoplastic resin,
wherein the mixing ratio of the thermoplastic resin in the forming binder is 5 to 50% by weight.

2. A honeycomb formed body according to Claim 1, wherein the mixing ratio of the thermoplastic resin in the forming material is 20 to 40% by weight.

3. A honeycomb formed body according to Claim 1 or 2,
wherein the raw material powder is a ceramic powder.

4. A honeycomb formed body according to Claim 3, wherein the raw material powder is a mixed powder having a cordierite composition.

5. A honeycomb formed body according to Claim 1 or 2,
wherein the raw material powder is a metal powder.

6. A honeycomb formed body according to any of Claims 1 to 5, which has a partition wall thickness of 25 to 100 µm.

7. A honeycomb formed body according to any of Claims 1 to 6, which is used as a carrier for catalyst for purification of automobile exhaust gas.

8. A process for producing a honeycomb formed body set forth in any of Claims 1 to 7, by subjecting a mixture of a raw material powder and a forming binder to extrusion, which process comprises heating the mixture to a forming temperature, subjecting the heated mixture to extrusion, and cooling and solidifying the formed body.
